# DEMANDE DE BREVET EUROPEEN

(11) **EP 3 576 274 A1**
(43) Date de publication de la demande: **04.12.2019**
(21) Numéro de dépôt: 19176299.6
(22) Date de dépôt: 23.05.2019
(51) Int. Cl.: H02M 3/156, G05F 1/56, H02M 1/00

(54) **CIRCUIT ÉLECTRONIQUE D'ALIMENTATION**

(30) Priorité: 29.05.2018 FR 1870616
(71) Demandeur: STMICROELECTRONICS (ROUSSET) SAS, 13790 Rousset (FR)
(72) Inventeur: CUENCA, Michel, 13240 SEPTEMES-LES-VALLONS (FR); THOMAS, Cedric, 13100 AIX-EN-PROVENCE (FR)
(74) Mandataire: Cabinet Beaumont

(57) **Abrégé**

La présente description concerne un circuit électronique comprenant une alimentation à découpage (104) alimentant une première charge (102) par l'intermédiaire d'un premier régulateur linéaire de tension (114), le premier régulateur comprenant un transistor, le substrat et la grille du transistor étant adaptés à être couplés à un noeud (103) d'application d'une tension d'alimentation (VDD).

## Description

### Domaine technique

La présente demande concerne les circuits électroniques et plus particulièrement les circuits comprenant des alimentations à découpage.

### Technique antérieure

Les alimentations à découpage sont des convertisseurs DC/DC qui incorporent un ou plusieurs éléments de commutation. Comme les autres types d'alimentations, les alimentations à découpage transfèrent une puissance fournie par une source DC à une charge, en modifiant les caractéristiques de courant et/ou de tension.

Le document US 7,202,653 décrit un convertisseur de puissance comprenant un convertisseur élévateur, un convertisseur abaisseur et un régulateur linéaire entre les deux.

Le document US 2015/0008871 décrit un procédé pour empêcher une inversion de circulation du courant de sortie dans un régulateur de tension et un tel régulateur.

Le document JP 2004280704 décrit un circuit pour empêcher une circulation inverse dans un dispositif d'alimentation d'énergie.

Le document US 2016/0291618 décrit un régulateur de tension continue linéaire comprenant un circuit commutable pour une suppression de courant de fuite.

### Résumé de l'invention

Ainsi, un mode de réalisation prévoit un circuit électronique comprenant une alimentation à découpage alimentant une première charge par l'intermédiaire d'un premier régulateur linéaire de tension, le premier régulateur comprenant un transistor, le substrat et la grille du transistor étant adaptés à être couplés à un noeud d'application d'une tension d'alimentation.

Selon un mode de réalisation, la première charge comprend des circuits logiques.

Selon un mode de réalisation, l'alimentation à découpage alimente directement une deuxième charge.

Selon un mode de réalisation, la deuxième charge comprend un circuit d'émission et/ou réception de signaux radio fréquence.

Selon un mode de réalisation, le transistor est connecté, par la source et le drain, entre la sortie de l'alimentation à découpage et l'entrée de la première charge, le transistor étant commandé par un amplificateur opérationnel recevant en entrée une tension de référence et la tension d'entrée de la première charge.

Selon un mode de réalisation, le substrat du transistor est adapté à être connecté au noeud d'application de la tension d'alimentation ou à la sortie de l'alimentation à découpage.

Selon un mode de réalisation, le circuit comprend un état de fonctionnement dans lequel le substrat du transistor est connecté à la sortie de l'alimentation à découpage, la grille du transistor n'est pas connectée au noeud d'application de la tension d'alimentation, et la deuxième charge est en fonctionnement.

Selon un mode de réalisation, le circuit comprend un état de fonctionnement dans lequel le substrat et la grille du transistor sont connectés au noeud d'application de la tension d'alimentation et la deuxième charge est éteinte.

Selon un mode de réalisation, le circuit comprend un deuxième régulateur linéaire de tension en série avec un interrupteur, couplés entre le noeud d'application de la tension d'alimentation et l'entrée de la première charge.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une représentation schématique d'un mode de réalisation d'un circuit électronique ; et
la figure 2 est une représentation schématique plus détaillée d'un élément du circuit de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être directement reliés (connectés) ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence à l'orientation des figures.

Sauf précision contraire, les expressions "environ", "approximativement", "sensiblement", et "de l'ordre de" signifient à 10 % près, de préférence à 5 % près.

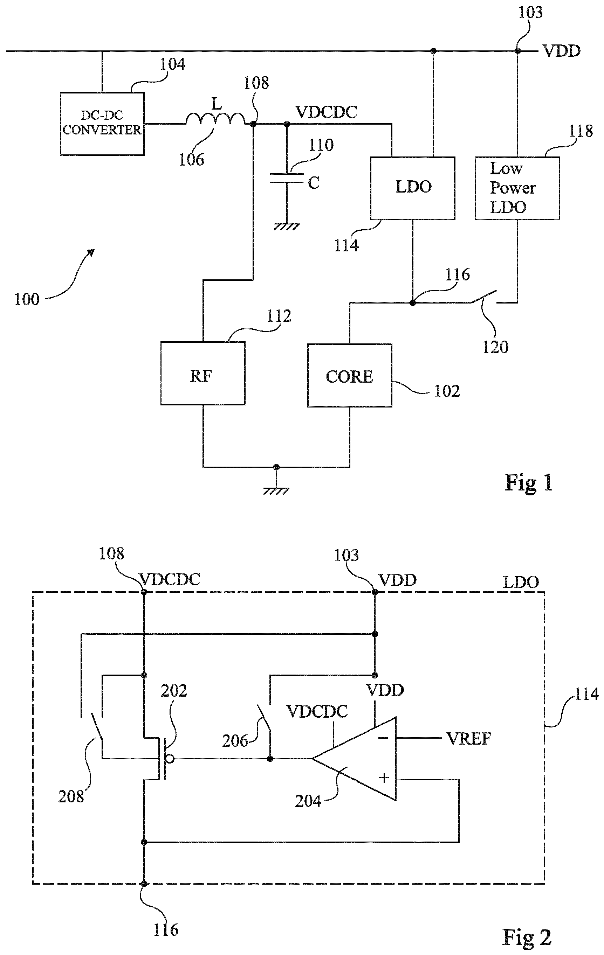

La figure 1 est une représentation schématique d'un mode de réalisation d'un circuit électronique 100.

Le circuit 100 comprend une première charge, par exemple un circuit 102 (CORE). Le circuit 102 comprend par exemple des éléments logiques, par exemple un microprocesseur et des mémoires.

Le circuit 100 comprend de plus une alimentation à découpage 104 (DC-DC CONVERTER). L'alimentation à découpage 104 est connectée, en entrée, à un noeud 103 d'application d'une tension d'alimentation VDD, et, en sortie, à une première borne d'une inductance 106 (L). La deuxième borne de l'inductance 106 est connectée à un noeud 108. La tension sur le noeud 108 est une tension VDCDC fournie par l'alimentation à découpage 104. Le noeud 108 est relié à la masse par une capacité 110 (C).

Le circuit 100 peut comprendre de plus une deuxième charge, par exemple un circuit 112 d'émission et/ou réception de signaux radio fréquence (RF). Le circuit 112 est connecté entre le noeud 108 et la masse et est alimenté par l'alimentation à découpage 104.

Le circuit 100 comprend de plus un régulateur linéaire de tension 114 (LDO). Le régulateur 114 est connecté, en entrée, au noeud 108 (tension VDCDC) et au noeud 103 d'application de la tension VDD, et, en sortie, à un noeud 116. Un mode de réalisation de régulateur 114 est décrit plus en détail en relation avec la figure 2.

Le circuit 102 est connecté entre le noeud 116 et la masse. Le circuit 102 est donc alimenté par l'alimentation à découpage 104 en série avec le régulateur 114.

Le circuit 100 peut comprendre un autre régulateur linéaire de tension 118 (LOW POWER LDO) destiné à un mode de fonctionnement basse puissance. Le régulateur 118 est couplé entre le noeud 103 d'application de la tension VDD et une première borne d'un interrupteur 120. La deuxième borne de l'interrupteur 120 est connectée au noeud 116.

Dans un premier mode de fonctionnement, l'alimentation à découpage 104 est en fonctionnement. L'alimentation à découpage 104 alimente le circuit 112 directement et le circuit 102 par l'intermédiaire du régulateur 114. En outre, l'interrupteur 120 est ouvert. Le régulateur 118, pouvant ou non être en fonctionnement, n'a donc pas d'influence sur le circuit 100.

Dans un deuxième mode de fonctionnement dit "basse puissance", l'alimentation à découpage 104 et le régulateur 114 ne sont pas en fonctionnement, de même que le circuit 112 qui n'est pas alimenté. L'interrupteur 120 est fermé et le régulateur 118 est en fonctionnement, ce qui permet d'alimenter au moins une partie des éléments du circuit 102.

Dans un troisième mode de fonctionnement, dit "Standby", le circuit 112 est absent ou éteint et l'interrupteur 120 est ouvert. L'alimentation à découpage 104 et le régulateur 114 ne sont pas en fonctionnement. Le circuit 102 n'est pas alimenté.

Le régulateur 118 est configuré pour fournir une puissance relativement faible par rapport à la puissance fournie par le régulateur 114, par exemple suffisante pour alimenter une partie des éléments du circuit 102, typiquement en mode veille. Le régulateur 118 est par exemple configuré pour pouvoir alimenter des mémoires volatiles comprises dans le circuit 102.

La figure 2 est une représentation schématique plus détaillée d'un mode de réalisation de régulateur linéaire 114. Le régulateur 114 comprend deux entrées, connectées, comme en figure 1, au noeud 103 d'application de la tension d'alimentation VDD et au noeud 108. Le régulateur 114 comprend en outre une sortie connectée au noeud 116.

Le régulateur comprend un transistor 202 connecté entre les bornes 116 et 108. Le transistor 202, par exemple un transistor de type PMOS, est commandé par un amplificateur opérationnel 204. L'amplificateur opérationnel 204 est alimenté par les tensions VDD et VDCDC. Les entrées positive (+) et négative (-) de l'amplificateur opérationnel sont respectivement connectées au noeud 116 et à un noeud d'application d'une tension de référence VREF, par exemple inférieure à VDCDC.

Le régulateur 114 comprend un interrupteur 206 reliant la grille du transistor (la sortie de l'amplificateur opérationnel 204) et le noeud 103 d'application de la tension VDD. La grille du transistor 202 peut donc être connectée ou non au noeud 103 d'application de la tension VDD et la tension VDD peut être appliquée ou non au niveau de la grille du transistor 202.

Le régulateur 114 peut en outre comprendre un interrupteur 208 reliant le substrat du transistor 202 soit au noeud 103 d'application de la tension VDD, soit au noeud 108. Ainsi, la tension appliquée au substrat du transistor 202 peut être soit la tension VDCDC, soit la tension VDD.

On pourrait choisir de connecter le régulateur linéaire de tension 114 en parallèle avec l'alimentation à découpage 104, c'est-à-dire entre le noeud 103 d'application de la tension VDD et le noeud 108 constituant la sortie de l'alimentation à découpage. Le circuit 102 serait alors connecté en parallèle avec le circuit 112 entre le noeud 108 et la masse.

Toutefois, le bruit généré par l'alimentation à découpage 104 risquerait alors d'être transmis au circuit 112 par l'intermédiaire d'un substrat commun aux circuits 112 et 102. En effet, le circuit 112 est configuré pour rejeter uniquement le bruit l'atteignant directement à partir du noeud 108 et est donc sensible à du bruit transmis par le circuit 102.

Durant le premier mode de fonctionnement décrit précédemment, dans lequel les circuits 102 et 112 sont alimentés par l'alimentation à découpage 104 et le régulateur 114, l'interrupteur 206 est ouvert et l'interrupteur 208, s'il est présent, relie le substrat du transistor 202 au noeud 108. Ainsi, le bruit généré par l'alimentation à découpage 104 n'est pas transmis au noeud 116 et n'est donc pas transmis au substrat commun des circuits 112 et 102.

Durant le deuxième mode de fonctionnement dit "basse puissance", l'interrupteur 206 est fermé et l'interrupteur 208 relie le substrat du transistor au noeud 103 d'application de la tension VDD. Ainsi, la tension VDD est appliquée sur le substrat et sur la grille du transistor 202. Cela permet d'éviter les fuites de courant entre le noeud 108 et le noeud 116. Cela permet donc d'éviter de décharger la capacité 110 durant ce mode de fonctionnement. En effet, le transistor 202 est ouvert et les tensions grille/source et grille/drain de ce transistor 202 sont négatives, donc les fuites entre le drain et la source sont négligeables.

Divers modes de réalisation et variantes ont été décrits. Ces divers modes de réalisation et variantes sont combinables et d'autres variantes apparaitront à l'homme de l'art.

Enfin, la mise en oeuvre pratique des modes de réalisation et variantes décrits est à la portée de l'homme du métier à partir des indications fonctionnelles données ci-dessus.

## Revendications

1. Circuit électronique comprenant une alimentation à découpage (104) alimentant une première charge (102) par l'intermédiaire d'un premier régulateur linéaire de tension (114), et directement une deuxième charge (112), le premier régulateur comprenant un transistor (202), le substrat et la grille du transistor étant adaptés à être couplés à un noeud (103) d'application d'une tension d'alimentation (VDD) .

2. Circuit selon la revendication 1, dans lequel la première charge (102) comprend des circuits logiques.

3. Circuit selon la revendication 1 ou 2, dans lequel la deuxième charge (112) comprend un circuit d'émission et/ou réception de signaux radio fréquence.

4. Circuit selon l'une quelconque des revendications 1 à 3, dans lequel le transistor (202) est connecté, par la source et le drain, entre la sortie (108) de l'alimentation à découpage (104) et l'entrée (116) de la première charge (102), le transistor (202) étant commandé par un amplificateur opérationnel (204) recevant en entrée une tension de référence (VREF) et la tension d'entrée de la première charge.

5. Circuit selon l'une quelconque des revendications 1 à 4, dans lequel le substrat du transistor (202) est adapté à être connecté au noeud (103) d'application de la tension d'alimentation (VDD) ou à la sortie (108) de l'alimentation à découpage (104).

6. Circuit selon les revendications 4 et 5, comprenant un premier état de fonctionnement dans lequel le substrat du transistor (202) est connecté à la sortie (108) de l'alimentation à découpage (104), la grille du transistor n'est pas connectée au noeud (103) d'application de la tension d'alimentation (VDD), et la deuxième charge (112) est en fonctionnement.

7. Circuit selon les revendications 4 et 5 ou selon la revendication 6, comprenant un deuxième état de fonctionnement dans lequel le substrat et la grille du transistor (202) sont connectés au noeud (103) d'application de la tension d'alimentation (VDD) et la deuxième charge (112) est éteinte.

8. Circuit selon l'une quelconque des revendications 1 à 7, comprenant un deuxième régulateur linéaire de tension (118) en série avec un interrupteur (120), couplés entre le noeud (103) d'application de la tension d'alimentation (VDD) et l'entrée (116) de la première charge (102).
